Europäisches Patentamt

(19) European Patent Office

Office européen des brevets

(11) EP 0 744 844 B1

## (12) FASCICULE DE BREVET EUROPEEN

(45) Date de publication et mention
de la délivrance du brevet:
**20.05.1998 Bulletin 1998/21**

(51) Int Cl.⁶: **H04B 10/155**, H04L 27/20

(21) Numéro de dépôt: **96401093.8**

(22) Date de dépôt: **20.05.1996**

(54) **Procédé d'inscription de données binaires sur une onde porteuse, notamment optique, et système de transmission utilisant ce procédé**

Binärdateneinschreibungsverfahren, insbesondere optisches, und Vorrichtung zur Durchführung dieses Verfahrens

Method of inscription of binary data on a carrier wave, especially optical, and transmission system using this method

(84) Etats contractants désignés:
**AT BE CH DE ES FR GB IT LI NL SE**

(30) Priorité: **24.05.1995 FR 9506237**

(43) Date de publication de la demande:
**27.11.1996 Bulletin 1996/48**

(73) Titulaire: **ALCATEL ALSTHOM COMPAGNIE GENERALE D'ELECTRICITE**
**75008 Paris (FR)**

(72) Inventeur: **Penninckx, Dennis**
**91310 Montlhéry (FR)**

(74) Mandataire: **Fournier, Michel et al**
**c/o ALCATEL ALSTHOM,**
**Département de Propriété Industrielle,**
**30, avenue Kléber**
**75116 Paris (FR)**

(56) Documents cités:
**FR-A- 2 670 638**

• ELECTRONICS LETTERS, vol. 31, no. 1, 5 Janvier 1995, STEVENAGE GB, pages 58-59, XP000575311 A.J.PRICE ET AL.: "Reduced bandwidth optical digital intensity modulation with improved chromatic dispersion tolerance"
• IEEE GLOBAL TELECOMMUNICATIONS CONFERENCE & EXHIBITION, HOLLYWOOD, NOVEMBER 28 - DECEMBER 1988, vol. VOL. 2 OF 3, no. 27.5, 28 Novembre 1988, INSTITUTE OF ELECTRICAL AND ELECTRONICS ENGINEERS, pages 865-869, XP000014107 TOSHIYUKI ITOH ET AL: "CODED CONTINUOUS PHASE MODULATION COMBINED WITH NONUNIFORM MAPPING AND MULTI-H SCHEME"

## Description

La présente invention concerne la transmission de données par modulation d'une onde porteuse. On entend ici par onde tout phénomène oscillatoire se propageant par exemple le long d'un fil, dans un guide, ou dans l'espace libre. Cette invention s'applique notamment au cas où l'onde porteuse est une onde lumineuse guidée par une fibre optique.

Dans les systèmes assurant une telle transmission il est souhaité de diminuer la largeur spectrale du signal c'est-à-dire la largeur de la bande spectrale occupée par le signal à transmettre, autant que cela est possible sans augmenter d'une manière gênante le taux d'erreur de transmission. Une largeur spectrale diminuée peut notamment permettre d'augmenter le nombre de canaux spectraux de transmission portés par une même onde.

Un procédé de codage connu dit "code duobinaire" répond au souhait ci-dessus. Il est notamment applicable aux systèmes de transmission dans lesquels l'onde porteuse est une onde lumineuse guidée par une fibre optique.

La diminution de la largeur de bande spectrale du signal est spécifiquement souhaitable dans ce cas parce que les fibres optiques présentent souvent une dispersion chromatique et parce que cette dispersion applique au signal transmis une déformation qui croit avec la largeur spectrale de ce dernier et qui accroît ainsi le taux d'erreur.

Un mode de réalisation perfectionné de ce code a été proposé et est particulièrement avantageux dans ce cas parce qu'il permet de ne donner que deux valeurs à l'intensité de l'onde porteuse. Ce mode de mise en oeuvre perfectionné peut être appelé code duobinaire à inversion de phase. Il impose à l'onde porteuse de présenter sensiblement une intensité et une phase constantes pendant chacun des groupes de bits zéro ou un qui constituent le signal d'entrée, chaque groupe de bits zéro ou un s'étendant entre deux bits un ou zéro et étant constitué exclusivement par au moins un bit zéro ou un, respectivement. Cette intensité est égale à une intensité nominale pendant les groupes de bits un. Pendant les groupes de bits zéro elle est égale au quotient de cette intensité nominale par un taux d'extinction TX que l'on cherche à rendre le plus grand possible. Cette phase constitue une phase de référence pendant les groupes de bits zéro et elle présente un déphasage par rapport à cette phase de référence pendant chaque groupe de bits un. Ce déphasage est associé à ce groupe. Son sens est inversé entre deux groupes de bits un consécutifs lorsque et seulement lorsque le groupe de bits zéro séparant ces deux groupes de bits un comporte un nombre impair de bits. Et son amplitude est réglée pour être égale à 90 degrés environ.

Cette valeur de réglage est inhérente à ce code. En effet, selon la théorie connue qui a abouti à l'élaboration de ce code, lorsque deux groupes de bits un consécutifs sont séparés par un nombre impair de périodes bit, la réduction recherchée et obtenue pour la largeur spectrale du signal résulte de la combinaison de deux faits : Un premier fait est qu'un facteur de modulation affectant le champ de l'onde porteuse présente pendant ces deux groupes de bits un deux valeurs mutuellement symétriques telles que 1 et - 1. Le deuxième fait est qu'un déphasage cumulé de 2 x 90 = 180 degrés de l'onde porteuse entre ces deux groupes permet de donner deux telles valeurs symétriques au facteur de modulation tout en donnant une même valeur à l'intensité de l'onde porteuse pendant tous les groupes de bits un.

Le code duobinaire à inversion de phase est décrit dans un article "Reduced Bandwidth optical digital intensity modulation with improved chromatic dispersion tolerance", AJ. Price et al., IEEE Electronics Letters, Vol. 31, n°1, pp. 58-59, janvier 1995).

Il nécessite de manière connue l'utilisation d'un modulateur satisfaisant à deux conditions : La première condition est qu'il permette de réaliser un taux d'extinction suffisamment élevé pour que l'intensité de l'onde porteuse pendant les groupes de bits zéro puisse être assimilée à une intensité nulle.

La deuxième condition est qu'il soit apte à réaliser le déphasage cumulé de 180 degrés que ce code exige de réaliser dans certains cas entre deux groupes de bits un consécutifs.

Dans le domaine optique on connaît un type de modulateur satisfaisant à ces deux conditions : c'est le modulateur interferométrique du type Mach-Zehnder. Ce type de modulateur connu présente l'inconvénient de vieillir rapidement, d'être coûteux, encombrant, et/ou difficile à intégrer avec d'autres composants optiques nécessaires dans un système de transmission.

La présente invention a notamment pour but, dans un système de transmission optique, de permettre de réduire la largeur spectrale du signal tout en donnant deux valeurs seulement à l'intensité de l'onde porteuse et en utilisant un modulateur peu coûteux, peu encombrant, et/ou facile à intégrer avec d'autres composants.

De manière plus générale la présente invention a notamment pour but de permettre d'obtenir une réduction de la largeur spectrale d'un signal à transmettre sur une onde porteuse tout en ne donnant que deux valeurs à l'intensité de cette onde et en utilisant un modulateur répondant à des conditions moins strictes que précédemment.

Le procédé selon l'invention est caractérisé par le fait que lesdits déphasages associés aux groupes de bits un sont réglés pour conférer une valeur inférieure à 90 degrés à un déphasage nominal constitué par une valeur absolue moyenne de ces déphasages. Cette valeur est typiquement inférieure à 75 degrés. Le code selon l'invention peut être désigné comme un code à alternance de phase.

Dans un mode de mise en oeuvre typique l'intensité de l'onde porteuse est égale à l'intensité nominale pendant chacun des groupes de bits un et les valeurs absolues desdits déphasages sont toutes égales au déphasage nominal.

Le déphasage nominal et le taux d'extinction sont liés l'un à l'autre.

Une valeur optimale de ce déphasage peut être définie par ce taux selon une relation qui va être indiquée ci-après. Cette relation exprime le fait que la largeur spectrale du signal est minimale et elle peut être appelée "relation de largeur spectrale minimale". Selon cette relation cette valeur optimale est d'autant plus petite que le taux d'extinction est lui-même petit c'est-à-dire qu'elle constitue une fonction croissante de ce taux. Si cela est possible le déphasage nominal est de préférence choisi au voisinage de cette valeur optimale.

Dans le cas où la valeur maximale de déphasage réalisable par le modulateur disponible est inférieure à la valeur optimale définie par le taux d'extinction maximal permis par ce modulateur, on adopte cette valeur maximale du déphasage et on choisit le taux d'extinction effectif en tenant compte de cette valeur maximale de déphasage. Dans certains cas le taux d'extinction effectif peut être choisi au voisinage de la valeur qui est associée à la valeur maximale de déphasage par la relation de largeur spectrale minimale. Cette valeur associée du taux d'extinction étant une fonction croissante du déphasage nominal, le taux d'extinction choisi peut alors être plus petit que le taux d'extinction maximal permis par le modulateur, ce qui correspond à une valeur minimale de la largeur spectrale du signal à transmettre. Il faut cependant tenir compte de deux faits : L'un est que toute diminution du taux d'extinction tend par ailleurs à augmenter le taux d'erreur. L'autre est que plus le taux d'extinction est faible, plus la précision sur le déphasage donnant une largeur spectrale minimale doit être importante. C'est pourquoi il peut alors être préférable de choisir un taux d'extinction supérieur à cette valeur associée.

Il apparaît de ce qui précède que, de préférence, dans divers cas, le déphasage nominal DP est réglé à une valeur au plus égale à celle définie par la relation de largeur spectrale minimale. Cette relation s'écrit :

$$DPM = Arccos\ TX^{-1/2}$$

DPM représentant ladite valeur optimale ou ladite valeur maximale du déphasage nominal, TX représentant ladite valeur effective ou ladite valeur associée du taux d'extinction.

Quoiqu'il ait été indiqué ci-dessus que, typiquement, l'intensité de l'onde porteuse est égale à l'intensité nominale pendant tous les groupes de bits un et que les déphasages sont en valeurs absolues tous égaux au déphasage nominal, il doit être compris que la présente invention peut trouver avantageusement application dans des cas différents.

Pour exposer diverses possibilités de mise en oeuvre de cette invention, on peut par exemple considérer le cas où des données à transmettre sur une onde porteuse optique peuvent être représentées par une séquence binaire :

"0011110101100 10001..."

La transformation selon le code duobinaire à inversion de phase connu donne :

"00++++0-0++00++000-..."

où "+" et "-" représentent la présence d'une intensité lumineuse maximale avec respectivement une phase $\varphi$ et $\varphi + 180°$ soit +1 et -1.

De même que ce codage connu, le codage selon la présente invention donne une séquence de la forme :

"ZZaaaaZbZaaZZaZZZb..."

Mais, selon cette invention, on considére que Z, a et b sont des nombres complexes définissant chacun non plus seulement une amplitude affectée d'un signe algébrique mais aussi une phase pouvant prendre des valeurs continument réglables.

Tout codage de ce type conduit à une multiplication de la densité spectrale par un facteur $1 + m\cos(2\pi fT)$, f désignant la fréquence, T désignant la période bit, et m désignant un indice de modulation de spectre.

La valeur de cet indice est donnée par l'égalité :

$$m = \frac{2\alpha^2 + 2\beta^2 - 4\alpha\beta\cos(\Phi_a - \Phi_b)}{4 + 3\alpha^2 + 3\beta^2 - 4\alpha\cos\Phi_a - 4\beta\cos\Phi_b - 2\alpha\beta\cos(\Phi_a - \Phi_b)}$$

avec $\frac{a}{Z} = \alpha e^{i\Phi_a}$ et $\frac{b}{Z} = \beta e^{i\Phi_b}$

Cet indice m variant entre 0 et 1, les valeurs les plus proches de 1 correspondent à la largeur spectrale minimale du signal, c'est-à-dire que la relation de largeur spectrale minimale précédemment indiquée dans un cas plus particulier équivaut à m = 1.

Le code duobinaire à inversion de phase est obtenu pour $\Phi_a - \Phi_b$ égal à 180° et $\alpha$ et $\beta$ infinis. Il donne m = 1. La multiplication de la densité spectrale par $1 + \cos(2\pi fT)$ revient pour un signal NRZ à diviser la largeur spectrale par 2. Le spectre ne comporte pas de raie à la longueur d'onde moyenne car la moyenne du signal est nulle.

Le mode de mise en oeuvre typique précédemment mentionné correspond au cas où $\Phi_a = -\Phi_b = DP$ et $\alpha = \beta$. Dans ce cas l'indice m vaut :

$$m = \frac{2TX. (1-\cos 2DP)}{2 + 3TX - 4TX^{1/2}.\cos DP - TX.\cos 2DP}$$

Dans le cadre de cette invention, on peut alors démontrer que, quel que soit le taux d'extinction $TX = \alpha^2$, il existe un déphasage $DP = DPM$ $ArcCos(TX^{-1/2})$, inférieur à 90 degrés, tel que m soit égal à 1. L'existence et la valeur de ce déphasage établissent la relation de largeur spectrale minimale précédemment indiquée. Dans ces conditions et conformément à la présente invention, on peut profiter d'un taux d'extinction relativement petit pour se contenter de réaliser des déphasages relativement petits eux aussi. Un tel taux d'extinction est celui d'un modulateur à électroabsorption (TX voisin de 10) de type connu qui est peu coûteux et peu encombrant.

Tant que l'indice de modulation m est égal à 1 le spectre du signal obtenu par le codage selon l'invention présente une seule différence par rapport à celui qui est obtenu par le codage duobinaire à inversion de phase connu. Cette différence est qu'il comporte une raie à la longueur d'onde porteuse.

Il peut cependant être avantageux de diminuer encore le déphasage nominal en acceptant un indice de modulation de spectre inférieur à 1 c'est-à-dire un certain accroissement de la largeur spectrale du signal. En effet un indice de modulation de 2/3 suffit pour comprimer substantiellement le spectre. Un déphasage DP de l'ordre de 45-50° apparaît alors devoir être souvent suffisant pour un taux d'extinction de 10.

Mais on peut aussi prendre d'autres valeurs de $\Phi a$, $\Phi b$, $\alpha$ et $\beta$ de manière à obtenir une valeur de m suffisamment grande c'est-à-dire supérieure à 0,66 environ.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

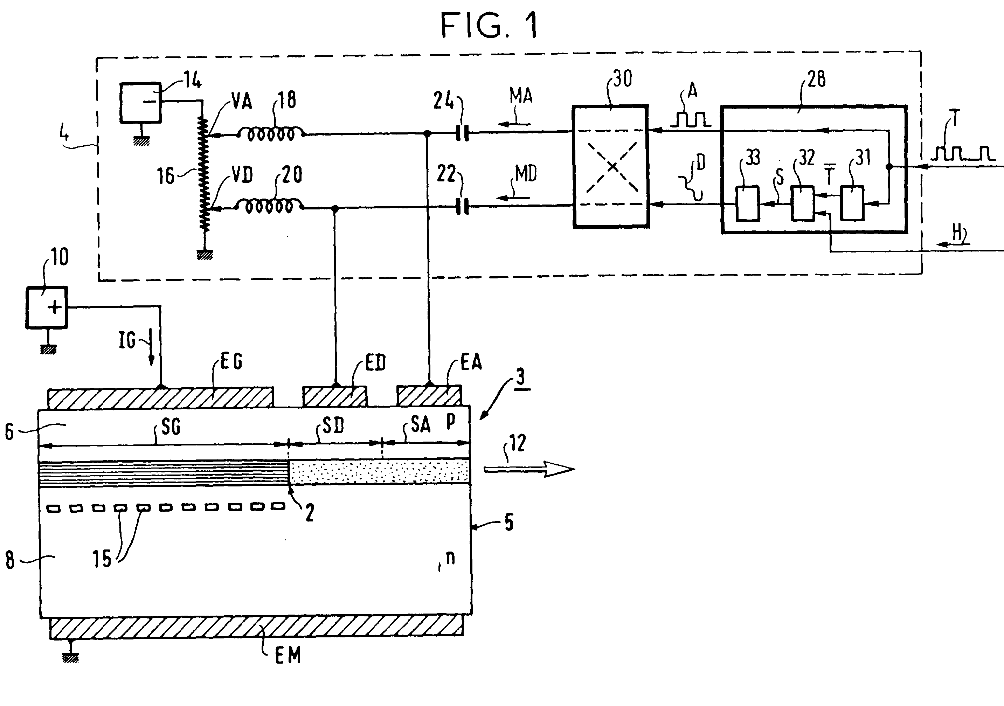

La figure 1 représente une vue d'un modulateur de lumière utilisable pour la mise en oeuvre du procédé selon cette invention avec coupe longitudinale d'une plaquette semiconductrice de ce modulateur.

La figure 2 représente des diagrammes de variations d'une atténuation et d'un déphasage appliqués à une onde porteuse optique par le modulateur de la figure 1, des tensions appliquées pour réaliser cette atténuation et ce déphasage étant portées en abscisses.

La figure 3 représente une vue d'un système de transmission de données selon cette invention, ce système incluant le modulateur de la figure 1.

Ce modulateur est un modulateur semiconducteur électro-optique. Il comporte les éléments suivants:

- Un guide de lumière 2 apte à guider une onde lumineuse selon une direction longitudinale et à la laisser sortir en extrémité de ce guide sous la forme d'une onde porteuse de sortie 12 portant une modulation. Ce guide est formé dans une plaquette semiconductrice 3 et son extrémité en question est formée par une face extrême de cette plaquette. Cette face extrême est oblique et/ou porte un revêtement antiréfléchissant pour permettre la sortie de l'onde lumineuse. Le guide 2 présente un effet électro-optique apte à moduler l'onde de sortie.
- Des électrodes d'atténuation EA, de déphasage ED, et commune EM disposées en regard de ce guide.
- Enfin un circuit de commande 4 apte à recevoir un signal d'entrée T et à fournir en réponse à ces électrodes des tensions de commande variables créant des champs électriques dans le guide 2 pour moduler l'onde de sortie 12.

Le guide 2 comporte notamment deux segments s'étendant et se succédant selon la direction longitudinale, à savoir un segment d'atténuation SA en regard de l'électrode EA et un segment de déphasage SD en regard de l'électrode ED. Chacun de ces deux segments présente d'une part une sensibilité électrique d'atténuation dCA/dV1 égale au rapport d'une variation dCA du coefficient d'absorption moyen CA de ce segment à une variation dV1 de la tension de commande V1 ayant entraîné cette variation de ce coefficient. Il présente d'autre part une sensibilité électrique de déphasage $d\varphi/dV2$ égale au rapport de la variation $d\varphi$ d'un angle de déphasage $\varphi$ à une variation dV2 de la tension de commande V2 ayant entraîné cette variation de cet angle. Cet angle $\varphi$ est fonction de l'indice de réfraction moyen de ce segment.

La relation entre la sensibilité électrique d'atténuation et la sensibilité électrique de déphasage de chaque segment est exprimée par un facteur de couplage phase amplitude $\alpha$ défini par l'équation

$$\frac{d\varphi}{dt} = \frac{\alpha}{2} \frac{1}{CA} \frac{dCA}{dt},$$

t représentant le temps.

Le facteur $\alpha$ est propre à ce segment. Il est plus petit dans le segment d'atténuation SA que dans le segment de déphasage SD.

Les électrodes d'atténuation EA et ED permettent d'appliquer aux deux segments SA et SD deux tensions de commande différentes constituant respectivement une tension de commande de segment d'atténuation et une tension de commande de segment de déphasage. Chacune de ces tensions a une composante continue et une composante alternative.

Le circuit de commande 4 reçoit un signal d'entrée T définissant d'une part une atténuation de consigne A représentative d'une variation d'atténuation à appliquer à ladite onde de sortie, d'autre part un déphasage de consigne D représentatif d'une variation de déphasage optique à appliquer à cette onde. Il fournit en réponse la composante alternative de la tension de commande MA du segment d'atténuation sous la forme d'une première combinaison par exemple linéaire:

$$MA = k1A + k2D$$

de l'atténuation de consigne et du déphasage de consigne. Il fournit d'autre part la composante alternative de la tension de commande MD du segment de déphasage sous la forme d'une deuxième combinaison:

$$MD = k3A + k4D$$

de l'atténuation de consigne et du déphasage de consigne. Cette deuxième combinaison est elle aussi par exemple linéaire mais elle est différente de la première. Les coefficients k1, k2, k3 et k4 sont sensiblement constants. Le rapport k1/k2 doit être différent du rapport k3/k4.

Le circuit 4 fournit enfin les composantes continues VA, VD des tensions de commande des segments d'atténuation et de déphasage.

Les segments d'atténuation SA et de déphasage SD sont constitués par des structures semiconductrices à puits quantiques multiples.

Le guide de lumière 2 est formé dans la plaquette 3 entre deux couches de confinement 6, 8 présentant des types de conductivité opposés p et n. Il comporte en outre un segment d'amplification SG inclus dans une cavité optique résonante et constitué par un matériau apte à devenir optiquement amplificateur sous l'action d'un courant d'injection IG circulant dans un sens direct entre ces deux couches de confinement. Cette cavité résonante est constituée par un réflecteur de Bragg distribué 15 couplé au guide 2.

Une électrode d'amplification EG est disposée en regard du segment d'amplification SG. Cette électrode et l'électrode commune EM sont alimentées par une source électrique d'amplification 10 pour faire passer le courant d'injection dans le sens direct entre ces deux couches de confinement. Ce segment d'amplification constitue alors un laser DFB intégré dans le modulateur pour engendrer une onde lumineuse dans le guide 2.

Le circuit de commande 4 fournit les composantes continues VA, VD des tensions de commande des segments d'atténuation et de déphasage de manière à empêcher le passage d'un courant entre les deux couches de confinement 6 et 8. Le passage d'un tel courant est empêché soit si une telle tension de commande a un sens inverse opposé audit sens direct, soit si cette tension a le sens direct mais une valeur inférieure à une limite dépendant des dopages des couches.

Selon une disposition facilitant la réalisation du modulateur les deux segments d'atténuation SA et de déphasage SD présentent des constitutions identiques. Cette identité de constitution leur confère des sensibilités électriques égales lorsqu'ils sont soumis à des tensions de commande variables restant mutuellement égales. Cependant, compte tenu du choix de la structure semiconductrice commune à ces deux segments, ces sensibilités dépendent fortement des composantes continues VA et VD de ces tensions de commande. Le générateur de commande 4 donne alors à ces deux composantes continues VA, VD deux valeurs différentes pour donner au facteur de couplage phase amplitude une valeur sensiblement plus petite dans le segment d'atténuation SA que dans le segment de déphasage SD.

Les composantes continues VA et VD des tensions de commande des segments d'atténuation et de déphasage sont fournies aux électrodes EA et ED par une source de polarisation continue 14 à travers un diviseur résistif 16 et des inductances de séparation 18 et 20.

Les composantes alternatives MA et MD de ces tensions de commande sont respectivement fournies à ces mêmes électrodes EA et ED, à travers des condensateurs de séparation 22 et 24, par un circuit de combinaison 30 qui forme les deux combinaisons linéaires précédemment mentionnées pour constituer ainsi les deux composantes alternatives MA et MD.

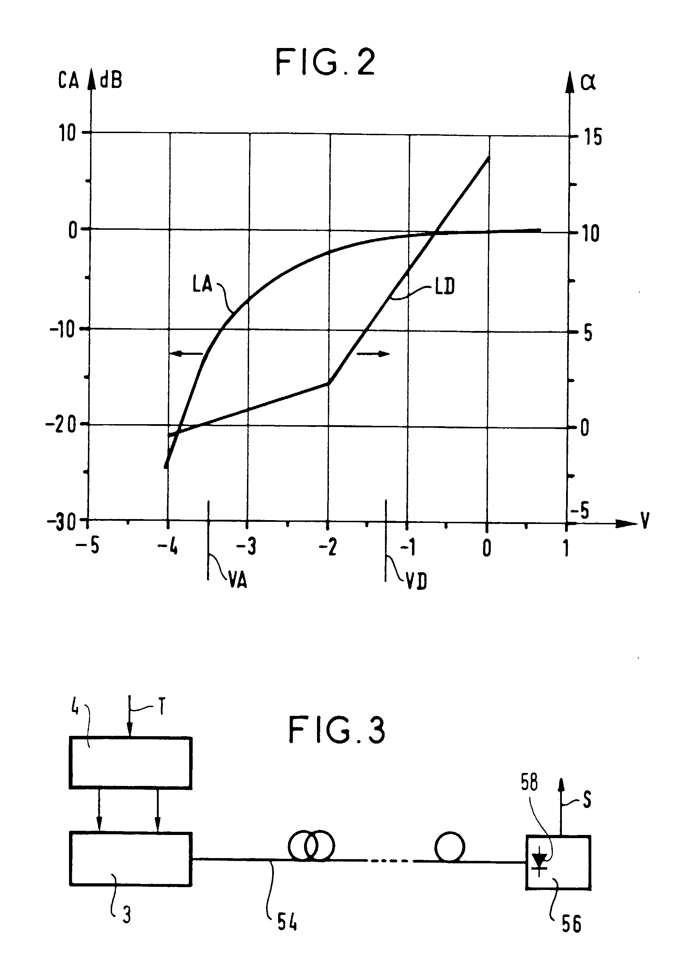

Le choix des composantes continues VA et VD apparaît sur la figure 2 sur laquelle les diagrammes LA et LD représentent respectivement les variations du coefficient d'absorption CA et du facteur de couplage phase-amplitude α, ce facteur définissant le déphasage, en fonction dans chaque cas de la tension appliquée entre l'électrode spécifique correspondante EA ou ED et l'électrode commune EM. Ces tensions sont représentées comme négatives parce qu'elles polarisent en inverse la diode formée par les couches de confinement 6 et 8. La tension VA procure une sensibilité électrique d'atténuation plus grande et une sensibilité électrique de déphasage plus petite que la tension VD.

Ces diagrammes correspondent aux choix précédemment décrits dans un cas où la lumière sélectionnée par le réflecteur de Bragg 15 présentait une longueur d'onde de 1550 nm.

L'atténuation de consigne A et le déphasage de consigne D sont fournis par un codeur 28 qui reçoit la séquence d'entrée binaire T représentative des données à transmettre.

Ce codeur applique à cette séquence le code à alternance de phase selon l'invention. Il laisse passer la séquence T sans modification pour constituer l'atténuation de consigne A. Pour constituer le déphasage de consigne D il transforme la séquence T d'abord en un signal duobinaire électrique. Ce signal duobinaire peut être créé en formant dans un circuit 31 la séquence complémentaire $\overline{T}$ de la séquence T. Cette séquence complémentaire $\overline{T}$ passe ensuite dans une bascule 32 de type "flip-flop" qui est régulée par l'horloge H du signal T et qui change d'état pour former un signal de sortie S quand un bit un se présente à son entrée. A la sortie de cette bascule un filtre 33 transforme le signal S en un signal à trois niveaux du type duobinaire qui constitue le déphasage de consigne D. Ce filtre doit s'approcher au plus près de la fonction de transfert

$$H(fo) = \tfrac{1}{2}\,[1+\cos 2\pi fT] \text{ pour } |fo| \le \tfrac{1}{2T}\ H(f)= 0 \text{ ailleurs}$$

où T est le temps-bit et f la fréquence

On peut par exemple prendre un filtre de Bessel d'ordre cinq de bande passante 2,8 GHz pour un débit de 10 Gbit/s. Cette technique est décrite dans l'article "The Duobinary Technique for High-Speed Data Transmission" A. Lender IEEE Trans.on Comn..Elec.vol 82 pp 214-218 05/1963.

Le coefficient $k_4$ est réglé pour obtenir le déphasage DP défini par le code à alternance de phase selon l'invention. Le coefficient $k_1$ est réglé de façon à ce que le taux d'extinction TX soit le plus grand possible. Les coefficients $k_2$ et $k_3$ sont ajustés pour obtenir une modulation de phase et une modulation d'amplitude les plus pures possibles.

Conformément à la figure 3 le système de transmission selon la présente invention comporte :

- Le circuit 4 recevant la séquence d'entrée T,
- La plaquette 3 fournissant l'onde porteuse modulée portant les données codées, l'ensemble du circuit 4 et de la plaquette 3 constituant un émetteur codeur,
- Une ligne de transmission à fibre optique 54 recevant et guidant cette onde porteuse modulée. Cette ligne présente une dispersion chromatique propre à provoquer une distorsion du signal modulant cette onde.
- Enfin un récepteur 56 recevant cette onde en sortie de cette liaison et fournissant en réponse un signal de sortie S, ce signal de sortie restituant les données à transmettre avec un taux d'erreurs qui est accru par la dispersion de la ligne 54, mais qui est cependant limité par la faible largeur spectrale de l'onde porteuse modulée. L'entrée de ce récepteur est constitué par une photodiode 58 qui discrimine l'intensité de cette onde porteuse pour reproduire la séquence binaire d'entrée T.

## Revendications

1. Procédé d'inscription de données binaires sur une onde porteuse notamment optique, procédé selon lequel un signal d'entrée est codé conformément à un code pour moduler une onde porteuse, ce signal d'entrée étant rythmé à une période bit et présentant la forme d'une succession alternative de groupes de bits zéro et de groupes de bits un, chaque groupe de bits zéro ou un s'étendant entre deux bits un ou zéro et étant constitué exclusivement par au moins un bit zéro ou un, respectivement,

   ce code imposant à cette onde porteuse de présenter sensiblement une intensité et une phase constantes pendant chacun desdits groupes de bits, cette intensité étant égale au moins en moyenne à une intensité nominale pendant les groupes de bits un et étant égale au moins en moyenne au quotient de cette intensité nominale par un taux d'extinction TX pendant les groupes de bits zéro, cette phase constituant une phase de référence pendant les groupes de bits zéro et présentant pendant chaque groupe de bits un et par rapport à cette phase de référence un déphasage associé à ce groupe, les sens des déphasages associés à deux groupes de bits un consécutifs étant mutuellement opposés lorsque et seulement lorsque le groupe de bits zéro séparant ces deux groupes de bits un comporte un nombre impair de bits,
   ce procédé étant caractérisé par le fait que lesdits déphasages associés aux groupes de bits un sont réglés pour conférer une valeur inférieure à 90 degrés à un déphasage nominal DP constitué par une valeur absolue moyenne de ces déphasages.

2. Procédé selon la revendication 1 caractérisé par le fait que le déphasage nominal DP est inférieur à 75 degrés.

3. Procédé selon la revendication 1 caractérisé par le fait que le déphasage nominal DP est réglé à une valeur au

plus égale à

$$DPM = ArccosTX^{-1/2}$$

TX désignant ledit taux d'extinction.

4. Procédé selon la revendication 1 caractérisé par le fait que le déphasage DP est réglé pour conférer une valeur supérieure à 0,66 à un indice de modulation de spectre

$$m = \frac{2TX. (1\text{-}cos\ 2DP)}{2 + 3TX - 4TX^{1/2}.cosDP - TX.cos2DP}$$

5. Système de transmission de données sur une onde porteuse notamment optique, ce système comportant

- un émetteur-codeur (3, 4) pour recevoir des données à transmettre pouvant être représentées par une succession rythmée de bits zéro et de bits un constituant une séquence d'entrée T, cette séquence présentant la forme d'une succession alternée de groupes de bits zéro et de groupes de bits un comportant chacun au moins un bit, cet émetteur-codeur fournissant en réponse une onde porteuse présentant une modulation définie par cet émetteur-codeur à partir de cette séquence d'entrée conformément à un code,
  ce code imposant à cette onde porteuse de présenter sensiblement une intensité et une phase constantes pendant chacun desdits groupes de bits de la séquence d'entrée, cette intensité étant égale au moins en moyenne à une intensité nominale pendant les groupes de bits un et étant égale au moins en moyenne au quotient de cette intensité nominale par un taux d'extinction TX pendant les groupes de bits zéro, cette phase constituant une phase de référence pendant les groupes de bits zéro et étant affectée d'un déphasage par rapport à cette phase de référence pendant chaque groupe de bits un, le sens de ce déphasage étant inversé entre deux groupes de bits un consécutifs lorsque et seulement lorsque le groupe de bits zéro séparant ces deux groupes de bits un comporte un nombre impair de bits,
- et un récepteur (56) situé à distance de l'émetteur-codeur et recevant ladite onde porteuse présentant ladite modulation, ce récepteur reproduisant ladite séquence d'entrée par discrimination de l'intensité de cette onde porteuse,

ce système étant caractérisé par le fait que ledit émetteur-codeur règle un déphasage nominal DP à une valeur inférieure à 90 degrés, ce déphasage nominal étant une valeur absolue moyenne desdits déphasages.

6. Dispositif selon la revendication 5, caractérisé par le fait que le déphasage nominal DP est inférieur à 75 degrés.

7. Dispositif selon la revendication 5 caractérisé par le fait que le déphasage nominal DP est au plus égal à

$$DPM = ArccosTX^{-1/2}$$

TX désignant ledit taux d'extinction.

8. Dispositif selon la revendication 5 caractérisé par le fait que le déphasage DP est réglé pour conférer une valeur supérieure à 0,66 à un indice de modulation de spectre

$$m = \frac{2TX. (1\text{-}cos\ 2DP)}{2 + 3TX - 4TX^{1/2}.cosDP - TX.cos2DP}$$

TX désignant ledit taux d'extinction.

9. Système selon la revendication 6 caractérisé par le fait que ledit émetteur-codeur comporte

- une source de lumière SG pour fournir ladite onde porteuse,
- un codeur (28) pour recevoir ladite séquence d'entrée T et fournir une atténuation A et une phase D de consigne pour cette onde,
- un circuit de combinaison (30) réalisant deux combinaisons distinctes de cette atténuation et de cette phase,
- et un modulateur à électroabsorption comportant deux sections SD, SA commandées respectivement par les deux dites combinaisons pour conférer à cette onde ladite intensité et ladite phase constantes pendant chacun desdits groupes de bits d'entrée.

**Patentansprüche**

1. Verfahren zum Einschreiben von Binärdaten auf eine insbesondere optische Trägerwelle, bei dem ein Eingangssignal einem Code entsprechend codiert wird, um eine Trägerwelle zu modulieren, wobei dieses Eingangssignal mit einer Bit-Periode getaktet ist und die Form einer abwechselnden Folge von Null-Bitgruppe und Eins-Bitgruppen aufweist, wobei jede Null- oder Eins-Bitgruppe sich zwischen zwei Eins- oder Null-Bits erstreckt und ausschließlich durch wenigstens ein Null- bzw. Eins-Bit gebildet ist,
wobei dieser Code erfordert, daß diese Trägerwelle eine Intensität und eine Phase aufweist, die während jeder der Bit-Gruppen im wesentlichen konstant sind, wobei diese Intensität wenigstens im Mittel gleich einer Nennintensität während der Eins-Bitgruppen und wenigstens im Mittel gleich dem Quotienten dieser Nennintensität durch ein Auslöschungsverhältnis TX während der Null-Bitgruppen ist, wobei diese Phase eine Referenzphase während der Null-Bitgruppen bildet und während jeder Eins-Bitgruppe und in Bezug auf diese Referenzphase eine dieser Gruppe zugeordnete Phasenverschiebung aufweist, wobei die Richtungen der zwei aufeinander folgenden Eins-Bitgruppen zugeordneten Phasenverschiebungen einander entgegengesetzt sind, wenn und nur wenn die diese zwei Eins-Bitgruppen trennende Null-Bitgruppe eine ungerade Anzahl von Bits umfaßt,
dadurch gekennzeichnet, daß die den Bitgruppen zugeordneten Phasenverschiebungen geregelt sind, um einer durch einen mittleren Absolutwert dieser Phasenverschiebungen gebildeten Nennphasenverschiebung DP einen Wert von unter 90° zu geben.

2. Verfahren nach Anspruch 1, dadurch gekennzeichnet, daß die Nennphasenverschiebung DP kleiner als 75° ist.

3. Verfahren nach Anspruch 1, dadurch gekennzeichnet, daß die Nennphasenverschiebung DP auf einen Wert höchstens gleich

$$DPM = ArccosTX^{-\frac{1}{2}}$$

geregelt ist, wobei TX das Auslöschungsverhältnis bezeichnet.

4. Verfahren nach Anspruch 1, dadurch gekennzeichnet, daß die Phasenverschiebung geregelt ist, um einem Spektralmodulationsindex

$$m = \frac{2TX. (1\text{-}cos\ 2DP)}{2 + 3TX - 4TX^{1/2}.cosDP - TX.cos2DP}$$

einen Wert größer als 0,66 zu geben.

5. System zur Datenübertragung auf einer insbesondere optischen Trägerwelle, mit

- einem Codierer-Sender (3, 4) zum Empfangen von zu übertragenden Daten, die durch eine getaktete Folge von Null-Bits und Eins-Bits dargestellt werden können, die eine Eingangsfolge T bilden, wobei diese Folge die Form einer abwechselnden Abfolge von Null-Bitgruppen und Eins-Bitgruppen aufweist, die jeweils mindestens ein Bit umfassen, wobei der Codierer-Sender in Reaktion eine Trägerwelle liefert, die eine durch diesen Codierer-Sender anhand der Eingangsfolge nach einem Code festgelegte Modulation aufweist,
wobei dieser Code erfordert, daß die Trägerwelle eine Intensität und eine Phase aufweist, die während jeder der Bitgruppen der Eingangssequenz im wesentlichen konstant sind, wobei diese Intensität wenigstens im Mittel gleich einer Nennintensität während der Eins-Bitgruppen und wenigstens im Mittel gleich dem Quotienten dieser Nennintensität durch ein Auslöschungsverhältnis TX während der Null-Bitgruppen ist, diese Phase eine Referenzphase während der Null-Bitgruppen bildet und während jeder Eins-Bitgruppe mit einer Phasenverschiebung in Bezug auf diese Referenzphase versehen ist, wobei die Richtung dieser Phasenverschiebung zwischen zwei aufeinander folgenden Eins-Bitgruppen invertiert ist, wenn und nur wenn die diese zwei Eins-Bitgruppen trennende Null-Bitgruppe eine ungerade Anzahl Bits umfaßt,

- und einem Empfänger (56), der in Abstand vom Codierer-Sender angeordnet ist und die die Modulation aufweisende Trägerwelle empfängt, wobei dieser Empfänger die Eingangsfolge durch Diskriminierung der Intensität dieser Trägerwelle wiederherstellt,

dadurch gekennzeichnet, daß der Codierer-Sender eine Nennphasenverschiebung DP auf einen Wert kleiner 90° regelt, wobei diese Nennphasenverschiebung ein mittlerer Absolutwert der Phasenverschiebung ist.

6. Vorrichtung nach Anspruch 5, dadurch gekennzeichnet, daß die Nennphasenverschiebung DP kleiner als 75° ist.

7. Vorrichtung nach Anspruch 5, dadurch gekennzeichnet, daß die Nennphasenverschiebung DP höchstens gleich

$$DPM = ArccosTX^{-\frac{1}{2}}$$

ist, wobei TX das Auslöschungsverhältnis bezeichnet.

8. Vorrichtung nach Anspruch 5, dadurch gekennzeichnet, daß die Phasenverschiebung DP geregelt ist, um einem Spektralmodulationsindex

$$m = \frac{2TX. (1\text{-}cos\ 2DP)}{2 + 3TX - 4TX^{1/2}.cosDP - TX.cos2DP}$$

einen Wert größer als 0,66 zu geben, wobei TX das Auslöschungsverhältnis bezeichnet.

9. System nach Anspruch 6, dadurch gekennzeichnet, daß der Codierer-Sender umfaßt:

- eine Lichtquelle SG zum Liefern der Trägerwelle,
- einen Codierer (28) zum Empfangen der Eingangsfolge T und zum Liefern einer Soll-Abschwächung A und -Phase D für diese Welle,
- eine Kombinationsschaltung (30), die zwei unterschiedliche Kombinationen dieser Abschwächung und dieser Phase realisiert,
- und einen Elektroabsorptionsmodulator, mit zwei Abschnitten SD, SA, die jeweils durch die zwei Kombinationen gesteuert sind, um dieser Welle die konstante Intensität und Phase während jeder der Eingangs-Bitgruppen zu geben.

**Claims**

1. A method of putting binary data on a carrier wave, in particular an optical carrier wave, in which method an input signal is encoded using a code for modulating a carrier wave, the input signal being clocked to a bit period and being in the form of an alternating succession of groups of zero bits and of groups of one bits, each group of zero bits extending between two one bits and being constituted by at least one zero bit and no one bits, and each group of one bits extending between two zero bits and being constituted by at least one one bit and no zero bits;

the code causing the carrier wave to have an intensity and a phase that are substantially constant during each of said groups of bits, said intensity being equal, at least on average, to a nominal intensity during the groups of one bits and being equal, at least on average, to the quotient of the nominal intensity divided by an extinction ratio TX during the groups of zero bits, said phase constituting a reference phase during the groups of zero bits, and having a phase shift relative to the reference phase during each group of one bits, which shift is associated with the group, the signs of the shifts associated with two consecutive groups of one bits being mutually opposite when and only when the group of zero bits separating the two groups of one bits comprises an odd number of bits;
said method being characterized by the fact that said phase shifts associated with the groups of one bits are set so as to impart a value of less than 90 degrees to a nominal phase shift DP constituted by a mean absolute value of the phase shifts.

2. A method according to claim 1, characterized by the fact that the nominal phase shift DP is less than 75 degrees.

3. A method according to claim 1, characterized by the fact that the nominal phase shift DP is set to a value of not more than:

$$DPM = ArccosTX^{-1/2}$$

where TX designates said extinction ratio.

4. A method according to claim 1, characterized by the fact that the phase shift DP is set so as to impart a value greater than 0.66 to a spectrum modulation index:

$$m = \frac{2TX. (1\text{-}cos\ 2DP)}{2 + 3TX - 4TX^{1/2}.cosDP - TX.cos2DP}$$

5. A system for transmitting data on a carrier wave, in particular an optical carrier wave, the system including:

an encoder-transmitter (3, 4) for receiving data to be transmitted that can be represented by a clocked succession of zero bits and of one bits constituting an input sequence T, which sequence is in the form of an alternating succession of groups of zero bits and of groups of one bits, each group comprising at least one bit, the encoder-transmitter responding by supplying a carrier wave having a modulation defined by the encoder-transmitter on the basis of the input sequence and using a code;

the code causing the carrier wave to have an intensity and a phase that are substantially constant during each of said groups of bits of the input sequence, said intensity being equal, at least on average, to a nominal intensity during the groups of one bits and being equal, at least on average, to the quotient of the nominal intensity divided by an extinction ratio TX during the groups of zero bits, said phase constituting a reference phase during the groups of zero bits, and being affected by a phase shift relative to the reference phase during each group of one bits, the sign of the shift being reversed between two consecutive groups of one bits when and only when the group of zero bits separating the two groups of one bits comprises an odd number of bits; and

a receiver (56) situated at a distance from the encoder-transmitter, and receiving said carrier wave having said modulation, the receiver reproducing said input sequence by carrier wave intensity discrimination;

said system being characterized by the fact that said encoder-transmitter sets a nominal phase shift DP to a value of less than 90 degrees, the nominal phase shift being a mean absolute value of said phase shifts.

6. Apparatus according to claim 5, characterized by the fact that the nominal phase shift DP is less than 75 degrees.

7. Apparatus according to claim 5, characterized by the fact that the nominal phase shift DP is set to a value of not more than:

$$DPM = ArccosTX^{-1/2}$$

where TX designates said extinction ratio.

8. A system according to claim 5, characterized by the fact that the phase shift DP is set so as to impart a value greater than 0.66 to a spectrum modulation index

$$m = \frac{2TX. (1\text{-}cos\ 2DP)}{2 + 3TX - 4TX^{1/2}.cosDP - TX.cos2DP}$$

where TX designates said extinction ratio.

9. A system according to claim 6, characterized by the fact that said encoder-transmitter includes:

a light source SG for supplying said carrier wave;

an encoder (28) for receiving said input sequence T and for supplying a reference phase D and a reference attenuation A for the wave;

a combiner circuit (30) performing two distinct combinations of the attenuation and of the phase; and

an electro-absorption modulator comprising two segments SD, SA controlled respectively by said two combinations so as to impart said constant intensity and said constant phase to the wave during each of said input groups of bits.

FIG. 1

# FIG.2

# FIG.3